# EUROPEAN PATENT SPECIFICATION

(11) **EP 2 729 509 B1**
(45) Date of publication and mention of the grant of the patent: **24.10.2018**
(21) Application number: 12733091.8
(22) Date of filing: 04.07.2012
(51) Int. Cl.: C08G 18/10, C08G 18/69, B29D 30/04, C08K 3/36

(54) **FILLED ELASTOMER COMPRISING POLYURETHANE**
GEFÜLLTES ELASTOMER MIT POLYURETHAN
ELASTOMÈRE CHARGÉ COMPRENANT DU POLYURÉTHANE

(30) Priority: 05.07.2011 WO PCT/CN2011/076872
(43) Date of publication of application: 14.05.2014
(73) Proprietor: BASF SE, 67056 Ludwigshafen am Rhein (DE)
(72) Inventor: LIANG, Dong, Guangzhou city Guangdong Province 511400 (CN); YE, Weihua, 511495 Guangzhou, Guangdong Panyu district (CN); LU, Yong, Shanghai 201100 (CN); TONG, Zhen, Guangzhou 510640 (CN); CHEN, Zhaohui, Guangzhou 510640 (CN)
(74) Representative: BASF IP Association
(86) International application number: PCT/EP2012/062961
(87) International publication number: WO 2013/004714

(56) References cited:
- EP-A2- 0 344 512
- GB-A- 1 437 007
- US-A- 4 285 854
- US-A- 4 343 339
- US-A- 4 726 590

## Description

The present invention relates to a method for producing a filled elastomer wherein a rubber composition is produced by mixing (I) raw rubber, (II) cross linking agent capable to induce cross linking of the raw rubber, (III) filler, comprising functional groups reactive towards isocyanates, (IV) isocyanate terminated polymer composition and optionally (V) further additives and cross linking of the rubber composition, wherein the rubber composition comprises besides the compounds (I) to (V) less than 10 % by weight of the total rubber composition of compounds having functional groups being reactive towards isocyanates and wherein the isocyanate terminated polymer composition (IV) is applied in an amount of 1 to 200 % by weight based on the weight of the filler (III). The present invention further relates to a filled elastomer obtainable according to said method and the use of filled elastomers according to the invention as shoe sole.

Elastomers produced from raw rubber and cross linking agent are widely known. Such Elastomers are used for many different purposes ranging from household to industrial products. Examples are shoe soles, balls, elastic straps, mats, coatings, for example for rackets, balloons, gaskets and gloves. Tires and tubes are the largest consumers of such kind of elastomers.

Often fillers are added to the raw rubber composition before cross linking. Fillers are used to modify the physical properties of the elastomers and to extend the elastomer by replacing raw rubber with the less expensive filler. As fillers often carbon black, minerals like silica, silicates like kaolin, calcium carbonate, crystalline silicon dioxide, barium sulfate, and zinc oxides are used.

It has been found that the smaller the filler particles are the more effective the physical and mechanical properties of the resulting Elastomer can be improved. Therefore often pyrogenic or fumed silica and precipitated silica is used as fillers. These fillers form spherical primary particles of a size in the range of 2 to 20 nm. The primary obtained particles usually form aggregates with a particle size of 3 to 100 nm wherein the primary particles are bound to each other by Si-O-Si bonds. These aggregated particles tend to form agglomerates having an average particle size in the rage of 1 µm to 1000 µm. In the agglomerates the silica particles are bound together by van der Waals forces and hydrogen bonds formed by Si-OH-groups on the surface of the silica particles.

In order to achieve a positive effect on physical and mechanical properties of an elastomer it is essential to break these aggregates and to disperse the filler particles within the rubber composition before cross linking. Dispersion can be obtained by mechanical forces like strong agitation but this is very energy and time consuming and usually some aggregates still remain after agitation.

An other way to break these agglomerates is the surface modification of the silica particles by coating of the hydrophilic surface of the silica particles with waxes, or polymers having hydrophilic and hydrophobic parts like polyethylene glycol polypropylene glycol or monomeric compounds like glycerol or triethanolamine.

A major disadvantage of coating the surface of the silica particles is that the interaction between silica, the coating and rubber is only very weak resulting in a weak bonding of the filler to the rubber molecules. Physical coating of silica surfaces is for example disclosed in EP 341383.

A stronger bonding between silica and rubber can be obtained by chemically modifying the surface of the silica particles. Therefore the surface of the silica particles can be modified by reaction with silanoles, organosilanes, silicone fluids or chlorosilanes. This is for example disclosed in EP 672731. Most used silane for this application is bis(triethoxysilylpropyl)tetrasulfane, which is sold under the name Si69® from Degussa.

Disadvantages of known surface modifiers on the basis of silanole, organosilanes, silicone fluids or chlorsilanes are that these chemicals are usually expensive and therefore their use is limited.

GB 795052 discloses the modification of silica aerogel with isocyanates. Preferably monoisocyanates like octadecyl isocyanate are applied. This treatment renders the aerogel less hydrophilic. The obtained aerogel is then milled and applied as filler in rubber compositions. The particles are smaller than 100 mesh which corresponds to a diameter of 254 µm. In the examples particles with a particle size of 325 mesh were used, corresponding to about 75 µm. Particles in the nanometer scale were not disclosed. Further silica aerogels are difficult to obtain and expensive.

Several prior art references apply either a huge amount of isocyanate terminated polymer (> 800 % by weight based on the weight of the filler: US 4 343 339; EP 344 512) or no isocyanate terminated polymer (US 4 726 590, GB 1 437 007).

It was object of the present invention to provide an elastomer with good physical properties like a high modulus, high tensile strength, high tear strength, high wear resistance and good fatigue performance. It was further object of the present invention to provide an elastomer having evenly distributed filler particles without the use of coupling agents on the basis of silanes, silanoles or silicon fluids.

Another object of the invention was to provide a process for production of these elastomers.

The inventive object is achieved via a method for producing a filled elastomer wherein a rubber composition is produced by mixing (I) raw rubber, (II) cross linking agent, (III) filler, comprising functional groups reactive towards isocyanates, (IV) isocyanate terminated polymer composition and optionally (V) further additives and cross linking of the rubber composition wherein the rubber composition comprises besides the compounds (I) to (V) less than 10 % by weight of the total rubber composition of compounds having functional groups being reactive towards isocyanates and wherein the isocyanate terminated polymer composition (IV) is applied in an amount of 1 to 200 % by weight based on the weight of the filler (III).

Elastomers are polymers with elastomeric behavior which at 20°C can be repeatedly elongated at least to 1.5 times their length and which immediately regain approximately their initial dimensions once the force required for the elongation has been removed.

Raw rubber (I) according to the invention is a polymeric composition which can be cross-linked to elastomers for example by vulcanization. Preferably butadiene rubber (BR), styrene-butadiene rubber (SBR), isoprene rubber (IR), styrene-isoprene-butadiene rubber (SIBR), acrylonitrile-butadiene rubber (NBR), chloroprene rubber (CR), isobutene-isoprene rubber (IIR), EPDM and natural rubber (NR), either pure or in the form of blends with one another, is used as raw rubber (I). EPDM here is a rubber whose preparation uses terpolymerization of ethene and of relatively large proportions of propylene, and also of a few percent of a third monomer having diene structure, the diene monomer in the rubber providing the double bonds needed for subsequent sulfur-vulcanization. Diene monomers mainly used are cis,cis-1,5-cyclooctadiene (COD), exo-dicyclopentadiene (DCP), endo-dicyclopentadiene (EDCP), and 1,4-hexadiene (HX), and among many others 5-ethylidene-2-norbornene (ENB). The raw rubbers (I) used particularly preferably comprise natural rubber, styrene-butadiene rubber, or comprise styrene-butadiene rubber blends with, for example, EPDM, or comprise EPDM.

Preferably the Mooney Viscosity (ML₁₊₄100°C) of raw rubber (I) is 20 to 80, particularly preferably from 30 to 70 and in particular 40 to 60, measured by shearing-disc viscometer according to the standard of ISO 289-1 or GB/T 1232.1.

As cross linking agent (II) any compound which can induce cross linking of the raw rubber (I) can be applied. Further cross linking agent (II) also includes energy rich radiation as UV radiation or ionizing radiation leading to cross linking of the raw rubber (I). Preferably cross linking agents (II) comprise one ore more vulcanisation chemicals. Vulcanisation chemicals are commonly known and for example disclosed in Ullmann's Encyclopedia of Industrial Chemistry, Rubber, 4. Chemicals and Additives, 2. Vulcanization Chemicals, pages 2 to 17, Wiley-VCH Verlag GmbH & Co KGaA, Weinheim, 2007, Online ISBN: 9783527306732. Vulcanization chemicals comprise one or more sulfur containing cross linking agents like sulfur dichloride, disulfur dichloride, dimorpholyl disulfide, 2-morpholinodithiobenzothiazole, caprolactam disulfide, dipentamethylenethiuram tetrasulfide, isopropylxanthic tetrasulfide or elemental sulfur, or sulfur free cross linking agents like peroxides, quinone dioximine and polymethylolphenol resins. Preferably cross linking agent (II) comprises elemental sulfur.

Further cross linking agents may comprise commonly known vulcanization accelerators and vulcanization retarders as for example disclosed in Ullmann's Encyclopedia of Industrial Chemistry, Rubber, 4. Chemicals and Additives, 2. Vulcanization Chemicals, pages 2 to 17, Wiley-VCH Verlag GmbH & Co KGaA, Weinheim, 2007, Online ISBN: 9783527306732. The cross linking agent preferably is applied in an amount commonly applied for cross linkage of raw rubber.

As filler (III) any solid compound like mineral partikles or polymeric particles can be applied. Preferably the mean particle size of the filler (III) within the final elastomer is from 2 nm and 5 mm, particularly preferably from 3 nm to 100 µm more particularly preferably 5nm to 1000 nm and in particular 5 nm to 100 nm. According to the present invention particle diameter means the equivalent particle diameter according to DIN 53 206. Further in the present invention it is understood that particle means a particle aggregates according to DIN 53 206.

Particles according to the present invention include all fillers commonly used in elastomer compositions as such as carbon blacks, silica, silicates, such as aluminium silicates like kaolins, carbonates such as calcium carbonate, barium sulfate, crystalline silicon dioxide such as ground quartz, metal oxides such as zinc oxides, metal hydroxides such as aluminium hydroxide, or thermoplastic polymers, such as thermoplastics comprising styrene, e.g. polystyrene or polystyrene-acrylonitrile (SAN), or ethylene-vinyl acetate (EVA), polyethylene, polypropylene, polycarbonate, thermoplastic polyurethane (TPU), polyvinyl chloride (PVC), or thermoplastic elastomers based on styrene-butadiene-styrene block copolymers or on styrene-isoprene-styrene block copolymers, or blends composed of the specified thermoplastics with one another.

Fillers (III) contain functional groups reactive towards isocyanates such as active hydrogen groups. Such active hydrogen for example can be found in -OH, -NH₂ or -NH groups on their surface. More preferably fillers comprise mineral fillers, especially silica.

Silica is preferably used as precipitated silica or pyrogenic silica and preferably has a primary particle diameter from 2 to 100 nm, particularly preferably from 2 to 50 nm and in particular from 3 to 30 nm. Preferably these silicas have a CATB surface area from 50 to 700 m²/g, more preferably 100 to 400 m²/g. For example the commercially available silicas under the trade name Ultrasil® from Evonik, Zeosil® from Rhodia and Hi-Sil® from PPG industries Inc. can be applied as fillers (III). Preferably fillers are used in a amount of 1 to 200, more preferred 10 to 150 % and especially preferred 20 to 100 %, based on the weight of the raw rubber (I).

As isocyanate terminated polymers (IV) any polymer with a number average molecular weight of more than 400 g/mol, preferably more than 1.000 g/mol and particularly preferably more than 2.000 g/mol are applied. The isocyanate terminated polymers (IV) according to the invention may comprise one or more isocyanate groups. Preferably the isocyanate terminated polymers (IV) have one to 5, more preferably 2 to 3 and in particular 2 isocyanate groups per molecule.

Preferably the isocyanate terminated polymer composition (IV) is obtainable via reaction or mixing of polyisocyanates (a) with polymeric compounds (b) reactive toward isocyanates, and also, if appropriate, with chain extenders and/or crosslinking agents (c), where an excess of the polyisocyanate (a) is used. Preferably the isocyanate terminated polymer composition (IV) comprises groups compatible or reactive to raw rubber (I) such as selected from the group, consisting of hydrophobic groups, groups comprising carbon-carbon double bonds or groups comprising sulfur sulfur bonds or a combination of these groups.

Polyisocyanates (a) that can be used here are any of the aliphatic, cycloaliphatic, and aromatic mono-, di- or polyfunctional isocyanates known from the prior art, or else any desired mixture thereof. Examples are diphenylmethane 4,4'-, 2,4'-, and 2,2'-diisocyanate, mixtures composed of monomeric diphenylmethane diisocyanates and of diphenylmethane diisocyanate homologs having a greater number of rings (polymer MDI), tetramethylene diisocyanate, hexamethylene diisocyanate (HDI), isophorone diisocyanate (IPDI), naphthalene 1,5-diisocyanate (NDI), toluene 2,4,6-triisocyanate, and toluene 2,4- and 2,6-diisocyanate (TDI), or a mixture thereof.

It is preferable to use toluene 2,4-diisocyanate, toluene 2,6-diisocyanate, diphenylmethane 2,4'-diisocyanate, and diphenylmethane 4,4'-diisocyanate, and diphenylmethane diisocyanate homologs having a greater number of rings (polymer MDI), and also mixtures of these isocyanates, uretonimine in particular a mixture composed of carbodiimide modified diphenylmethane diisocyanate and diphenylmethane 4,4'-diisocyanate, as polyisocyanate (a).

Polymeric compounds (b) used which are reactive toward isocyanates can be any of the compounds having at least two hydrogen atoms reactive toward isocyanate groups and which have a molecular weight of 300 g/mol and more. It is preferable to use polyesterols, polyetherols, or molecules that have primary or secondary amine groups at their end like amine terminated polyesterols. It is preferred in particular to use polyetherols or polyesterols or mixtures of polyetherols and polyesterols. Preferably the isocyanate terminated polymer composition (IV) comprises hydrophobic groups or groups reactive to the raw rubber (I). These hydrophobic groups or groups reactive to raw rubber (I) usually are part of the polymeric compounds (b) while these polymeric compounds (b) can be prepared by adding functionalized starting materials to the other starting materials generally used for the production of the polymeric compound reactive toward isocyanates (b). So for example common starting materials for the production of the compound (b) can be modified for example with hydrophobic groups, groups comprising carbon-carbon double bonds or groups comprising sulfur sulfur bonds.

Suitable polyetherols are prepared by known processes, for example via anionic polymerization from one or more alkylene oxides having from 2 to 4 carbon atoms in the alkylene radical, using alkali metal hydroxides or alkali metal alcoholates as catalysts, and with addition of at least one starter molecule which comprises from 2 to 5, preferably from 2 to 4, and particularly preferably from 2 to 3, in particular 2, reactive hydrogen atoms in the molecule, or via cationic polymerization using Lewis acids, such as antimony pentachloride or boron trifluoride etherate. Other catalysts that can be used are multimetal cyanide compounds, known as DMC catalysts. Examples of suitable alkylene oxides are tetrahydrofuran, propylene 1,3-oxide, butylene 1,2-oxide, butylene 2,3-oxide, and preferably ethylene oxide and propylene 1,2-oxide. The alkylene oxides can be used individually, in alternation in succession, or in the form of a mixture. It is preferable to use propylene 1,2-oxide, ethylene oxide, or a mixture composed of propylene 1,2-oxide and ethylene oxide.

Starter molecules that can be used are preferably water or di- and trihydric alcohols, e.g. ethylene glycol, 1,2- or 1,3-propanediol, diethylene glycol, dipropylene glycol, 1,4-butanediol, glycerol, and trimethylolpropane.

In a preferred embodiment polyethers comprising a hydrophobic group are employed. The incorporation of hydroxyl groups into oils and fats is effected in the main by epoxidation of the olefinic double bond present in these products, followed by the reaction of the epoxide groups formed with a monohydric or polyhydric alcohol. The epoxide ring is converted into a hydroxyl group or, in the case of polyfunctional alcohols, a structure having a larger number of OH groups. Since oils and fats are generally glyceryl esters, simultaneous transesterification reactions take place during the abovementioned reactions. The compounds thus obtained preferably have a molecular weight in the range from 500 to 1500 g/mol. Such products are available, for example, from Henkel.

The functionality of the preferred polyether polyols, particularly preferably polyoxypropylene polyols or polyoxypropylene polyoxyethylene polyols, is from 2 to 5, particularly preferably from 2 to 3, and their molar mass is from 400 to 9000 g/mol, preferably from 1000 to 6000 g/mol, particularly preferably from 1500 to 5000 g/mol, and in particular from 2000 to 4000 g/mol. The polyether polyol used particularly preferably comprises polypropylene glycol whose weight-average molar mass is from 1500 to 2500 g/mol.

Polyester polyols can be prepared, for example, from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Examples of possible dicarboxylic acids are: succinic acid, glutaric acid, adipic acid, suberic acid, azelaic acid, sebacic acid, decanedicarboxylic acid, maleic acid, fumaric acid, phthalic acid, isophthalic acid and terephthalic acid. The dicarboxylic acids can be used either individually or in admixture with one another. In place of the free dicarboxylic acids, it is possible to use the corresponding dicarboxylic acid derivatives, e.g. dicarboxylic esters of alcohols having from 1 to 4 carbon atoms or dicarboxylic anhydrides. Examples of dihydric and polyhydric alcohols, in particular diols, are: ethanediol, diethylene glycol, 1,2- or 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, 1,5-pentanediol and 1,6-hexanediol. It is also possible to use polyester polyols derived from lactones, e.g. ε-caprolactone, or hydroxycarboxylic acids, e.g. ω-hydroxycaproic acid.

To prepare the polyester polyols, the organic, e.g. aromatic and preferably aliphatic, polycarboxylic acids and/or derivatives and polyhydric alcohols can be polycondensed in the absence of catalysts or preferably in the presence of esterification catalysts, advantageously in an atmosphere of inert gas, e.g. nitrogen, carbon monoxide, helium, argon, etc., in the melt at temperatures of from 150 to 250°C, preferably from 180 to 220°C, if appropriate under reduced pressure, to the desired acid number which is preferably less than 10, particularly preferably less than 2. In a preferred embodiment, the esterification mixture is polycondensed at the abovementioned temperatures to an acid number of from 80 to 30, preferably from 40 to 30, under atmospheric pressure and subsequently under a pressure of less than 500 mbar, preferably from 50 to 150 mbar. Possible esterification catalysts are, for example, iron, cadmium, cobalt, lead, zinc, antimony, magnesium, titanium and tin catalysts in the form of metals, metal oxides or metal salts. However, the polycondensation can also be carried out in the liquid phase in the presence of diluents and/or entrainers, e.g. benzene, toluene, xylene or chlorobenzene, to azeotropically distill off the water of condensation. To prepare the polyester polyols, the organic polycarboxylic acids and/or derivatives and polyhydric alcohols are advantageously polycondensed in a molar ratio of 1:1-1.8, preferably 1:1.05-1.2.

The polyester polyols obtained preferably have a functionality of from 2 to 4, in particular from 2 to 3, and a molecular weight of from 400 to 5000 g/mol, preferably from 800 to 2500 g/mol.

In a preferred embodiment at least a part of the starting substances for the preparation of the polyester comprises a group which can form physical or chemical bonds with the raw rubber (I). These groups can be hydrophobic groups or groups reactive to functionalities of the raw rubber (I). Useful starting materials for preparing hydrophobic polyesters further include hydrophobic substances. The hydrophobic substances comprise water-insoluble substances comprising an apolar organic radical and also having at least one reactive group selected from the group consisting of hydroxyl, carboxylic acid, carboxylic ester or mixtures thereof. The equivalent weight of the hydrophobic materials is preferably between 130 and 1000 g/mol. Fatty acids can be used for example, such as stearic acid, oleic acid, palmitic acid, lauric acid or linoleic acid, and also fats and oils, for example castor oil, maize oil, sunflower oil, soyabean oil, coconut oil, olive oil or tall oil.

In another preferred embodiment one of the starting materials for the production of the polyesterol is a hydrophobized acid. This hydrophobized acid can be obtained by reacting a unsaturated diacid, for example an α,β-unsaturated carboxylic diacid or their derivatives with hydrophobic agents having reactive groups to the unsaturation. Hydrophobicizing agents that can be used preferably comprise hydrophobic compounds comprising at least one carbon-carbon double bond, e.g. linear or branched polyisobutylene, polybutadiene, polyisoprene, and unsaturated fatty acids or their derivatives. The reaction with the hydrophobicizing agents here takes place by processes known to the person skilled in the art, using an addition reaction of the hydrophobicizing agent onto the double bond in the vicinity of the carboxy group, as described by way of example in the German Laid-Open specifications DE 195 19 042 and DE 43 19 671. It is preferable here to start from polyisobutylene whose molar mass is from 100 to 10 000 g/mol, particularly preferably from 500 to 5000 g/mol, and in particular from 550 to 2000 g/mol. The advantage of the reaction product of a unsaturated diacid or its derivatives with a hydrophobizing agent that comprises more than one carbon carbon double bond is that the polyether produced can be linked to the raw rubber (I) during crosslinking, for example by vulcanization.

When polyesters comprise hydrophobic substances, the proportion of the overall monomer content of the polyester alcohol that is accounted for by the hydrophobic substances is preferably in the range from 1 to 80 mol%.

The functionality of the polyesterols used is preferably from 1.5 to 5, more preferred from 1.8 to 3.5 and particularly preferably from 1.9 to 2.5.

In an other embodiment hydrophobic fatty oils comprising OH groups can be used as polymeric compounds (b) which are reactive toward isocyanates. In one preferred embodiment castor oil is used, optionally in mixture with other polymeric compounds (b) which are reactive toward isocyanates as disclosed above.

Chain extenders and/or crosslinking agents (c) can also be used, if appropriate. The chain extenders and/or crosslinking agents (c) can be added prior to, together with, or after the addition of the polyols (b). Chain extenders and/or crosslinking agents (c) that can be used are substances whose molar mass is preferably smaller than 300 g/mol, particularly preferably from 60 to 250 g/mol, chain extenders here having 2 hydrogen atoms reactive toward isocyanates and crosslinking agents having 3 or more hydrogen atoms reactive toward isocyanate. These can be used individually or in the form of a mixture. If chain extenders are used, particular preference is given to 1,3- and 1,2-propanediol, dipropylene glycol, tripropylene glycol, and 1,3-butanediol.

If chain extenders, crosslinking agents, or a mixture of these are used, the amounts advantageously used of these are from 1 to 60% by weight, preferably from 1.5 to 50% by weight, and in particular from 2 to 40% by weight, based on the weight of polyisocyanates (a), of compounds (b) reactive toward isocyanate and of chain extenders and/or crosslinking agents (c).

The isocyanate terminated polymer composition (IV) is obtainable by reacting polyisocyanates (a) described above, for example at temperatures of from 30 to 100°C, preferably at about 70-75°C, with compounds (b) reactive toward isocyanates and also, if appropriate, with chain extender and/or crosslinking agent (c) to give the isocyanate terminated polymer composition (IV). It is preferable that polyisocyanate (a), compound (b) reactive toward isocyanate and also, if appropriate, chain extenders and/or crosslinking agents (c) are mixed with one another in a ratio of isocyanate groups to groups reactive toward isocyanates of from 1.5:1 to 15:1, preferably from 1.8:1 to 8:1. It is particularly preferable that for preparation of the prepolymers, polyisocyanates and the compound having groups reactive toward isocyanates, and chain extenders and/or crosslinking agents are mixed with one another in a ratio such that the NCO content of the isocyanate terminated polymer composition (IV) prepared is generally in the range from 5 to 30% by weight, preferably 10 to 30 % by weight, more preferably 15 to 28 by weight and most preferably 20 to 26 % by weight, based on the total weight of the isocyanate prepolymer prepared. Volatile isocyanates can then preferably be removed, preferably via thin-film distillation. The viscosity of the isocyanate prepolymers here is preferably from 1000 to 3000 mPa.s at 25°C. The viscosity of inventive isocyanate prepolymers based on toluene diisocyanate here is typically from 1000 to 1500 mPa.s, while the viscosity of inventive isocyanate prepolymers based on diphenylmethane diisocyanate here is typically from 2000 to 3000 mPa.s, in each case at 25°C.

The isocyanate terminated polymer composition (IV) may further comprise as surfactants, plasticizers, oxidation stabilizers, dyes, pigments, stabilizers, e.g. with respect to hydrolysis, light, heat, or discoloration, emulsifiers, flame retardants, antioxidants, adhesion promoters, and reinforcing agents.

The isocyanate terminated polymer composition (IV) is applied in an amount of 1 to 200 % by weight, preferably 5 to 150% by weight, more preferably 10 to 100% by weight and most preferably 20 to 80 % by weight, based on the weigt of the filler (III), especially based on the weight of the silica, used as filler (III).

As further additives (V) any additive known for the preparation of Elastomers can be used. Such additives are for example disclosed in Ullmann's Encyclopedia of Industrial Chemistry, Rubber, 4. Chemicals and Additives, 3. antidegradants, 4.4 pigments, 5. plasticisers and 6. processing additives, pages 17 to 28 and 41 to 51, Wiley-VCH Verlag GmbH & Co KGaA, Weinheim, 2007, Online ISBN: 9783527306732. They include plasticizers like mineral oils such as paraffin oil or naphthenic oil, ethers, such as dibenzyl ether, thioethers, esters such as phthalates, adiapates, sebacates, phosphates, or thioesters, polyesters based on phthalic acid or adipic acid and propane diols and/or butane diols or chlorinated paraffins. Further processing additives like peptizers, such as 2,2'-dibenzamido diphenyldisulfide or zinc soaps, homogenizers and dispersing agents such as fatty acid esters, metallic soaps, fatty alcohols or fatty acids, lubricants, such as fatty acid amides or fatty acid esters, tackifiers such as phenolic resins or hydrocarbon resins or release agents such as polyesters, polyethers or silicon oil based emulsions may be added. As antidegradants comonly known antidegrandant for rubber compositions can be applied as antioxidants, such as *p*-phenylenediamines substituted at nitrogen, diarylamines, *N,N*_-di-*β*-naphthyl-*p*-phenylenediamine, styrenated phenols, 2,4,6 substitutes monophenols, bifunctional phenols or waxes.

The rubber composition according to the invention does not comprise substantially any compounds reactive towards isocyanates besides fillers (III). This means that the rubber composition comprises besides the already mentioned compounds (I) to (V) less the 10 % be weight, preferably less than 5 % by weight and particularly preferably less than 1 % by weight of the total weight of the rubber composition of compounds having functional groups being reactive to isocyanates. On the other hand raw rubber (I) may comprise groups reactive to isocyanates under the provision that not more than 50%, preferably not more than 20 %, and particularly preferably not more than 10 % of the isocyanate groups added as isocyanate terminated polymer composition (IV) are reacted with raw rubber (I).

The mixing of the components (I) to (V) can be performed in any appropriate manner. Preferably common techniques for rubber processing are applied. After mixing the rubber composition is then processed further and molded by different procedures such as calendering, extrusion, pressing, injection molding, or coating processes, and then vulcanized through further energy input. Cross-linked structures are thus built up, which convert the rubber composition into the elastomer according to the invention. Processing is generally carried out in internal mixers, less frequently in open mills. Such processing is for example disclosed in Ullmann's Encyclopedia of Industrial Chemistry, Rubber, 5. Technology, 2. solid rubber processing, pages 17 to 43, Wiley-VCH Verlag GmbH & Co KGaA, Weinheim, 2007, Online ISBN: 9783527306732. So mixing can for example be performed in internal mixers or kneaders or in open mills.

All components (I) to (V) can be added to the mixing device independently, for example all at the same time. Preferably the invention the filler (III) and the isocyanate terminated polymer composition (IV) are premixed. To this pre mixture also chemically inert components such as solvents may be added but preferably no solvents are added. In case that solvents are added, these are removed after the pre mixture has been completed. In an other preferred embodiment fillers (III), isocyanate terminated polymer composition (IV) and at least a part of the raw rubber (I) and optionally all or a part of the further additives (V) are used to prepare the pre mixture. Preferably the pre mixture does not comprise cross linking agents (II). It is preferred to mix the compounds to prepare pre mixture at elevated temperatures such as for example 60 to 150 °C, preferably 80 to less than 120 °C. The pre mixture is then added to the remaining components including the cross linking agents (II) and further mixed. In an especially preferred embodiment the cross linking agent (II) is added to the other compounds (I) and (III) to (V) just before initiating the cross linking reaction of the rubber composition to form the elastomer.

The mixture can then be calendered, for example into sheets, or molded into the finished products and then may be vulcanized for example in heating chambers, autoclaves or heated molds. For vulkanisation the mixture usually is heated to temperatures in the range of 120 to 240 °C, preferably 140 to 220 °C.

A further embodiment of the invention is a filled elastomer obtainable according to the method of the invention. This elastomer can be used for all common rubber applications as for example for molded goods such as tires or shoe soles.

An elastomer according to the inventon showes an improved interaction of polymer and filler. Further it has been found that dispersion of fillers (III) within the rubber composition according to the invention is easier than without the use of the isocyanate terminated polymer composition (IV) and the dispersion of silica is generally improved. This results in an elastomer having a higher modulus, tensile strength, tear strength, wear resistance and fatigue performance. Compared with silane coupling agent, isocyanate prepolymer has higher reactivity, so that it can react with silica in lower temperature or within shorter time. High coupling efficiency can be gained in both open mill mixing and inner mixer mixing at lower temperature. In addition, the price of isocyanate prepolymer is lower than silane coupling agent, which makes it take advantage over silane coupling agent in rubber product cost.

The examples which follow illustrate the invention.

### Example 1:

14 g natural rubber (NR), 31.5 g styrene butadiene rubber (SBR) and 24.5 g butadiene rubber (BR) were masticated by mill roll XK-160 respectively for 2 minutes. Then these three rubbers were then mixed evenly to obtain a raw rubber composition.

A filler composition was prepared by mixing 45 g precipitated silica and 30 g of MDI prepolymer I having an NCO content of 20 wt.-%. This MDI prepolymer I was obtained by reaction of MDI and polyester polyol on the basis of adipic acid, ethylene glycol and diethylene glycol (molar ratio 5:4:2;) with an OH number of 56. The filler composition was then added to the raw rubber composition together with a cross linking composition consisting of 4 g polyethylene glycol (PEG 4000), 5 g zinc oxide (ZnO), 1 g stearic acid, 5 g naphthenic oil, 2 g 2,6 - di-tert-butyl -4 - methyl phenol (BHT), 3 g C5 petroleum resin, 5 g titanium dioxide (TiO2), 0.2 g tetramethyl thiuram sulfide (accelerant TS), 1.2 g 2,2 '- dithio-dibenzo thiazole (accelerant DM), 0.3 g diphenyl guanidine (promoter D) and 1.5 g sulfur (S). The resulting mixture was then evenly masticated.

### Example 2:

Example 2 corresponds to example 1 except the use of 25 g of precipitated silica and 30 g of the MDI prepolymer I.

### Example 3:

Example 3 corresponds to example 1 except the use of 16 g of natural rubber, 36 g of styrene butadiene rubber and 28 g of butadiene rubber. Further for the production of the filler 25 g of precipitated silica and 20 g of the MDI prepolymer I was used.

### Example 4:

Example 4 corresponds to example 1 except the use of 18 g of natural rubber, 40.5 g of styrene butadiene rubber and 31.5 g of butadiene rubber. Further for the production of the filler 35 g of precipitated silica and 10 g of a MDI prepolymer II was used. This MDI corresponds to MDI prepolymer I but was prepared at an NCO content of 15 wt.-%.

### Example 5:

Example 5 corresponds to example 4 except the use of 10g of MDI prepolymer I instead of 10 g of MDI prepolymer II.

### Example 6:

Example 6 corresponds to example 4 except the use of 10g of MDI prepolymer III instead of 10 g of MDI prepolymer II. This MDI prepolymer III corresponds to MDI prepolymer I but was prepared at an NCO content of 25 wt.-%.

### Example 7:

Example 7 corresponds to example 4 except the use of 10g of MDI prepolymer IV instead of 10 g of MDI prepolymer II. MDI prepolymer IV corresponds to MDI prepolymer I except the use of 1,4-butane diol instead of diethylene glycol (molar ratio 5:4:2;).

### Example 8:

Example 7 corresponds to example 4 except the use of 10g of MDI prepolymer V instead of 10 g of MDI prepolymer II. MDI prepolymer V has an NCO content of 15 wt.-% and was obtained by reaction of MDI and polyether polyol with a functionality of 2 and an OH number of 56 on the basis of propylene oxide and ethylene oxyde.

### Comparative Example 1:

Comparative example 1 corresponds to example 1 except the use of 20 g of natural rubber, 40.5 g of styrene butadiene rubber and 31.5 g of butadiene rubber. Further 45 g of precipitated silica was used without further treatment as filler composition.

### Comparative Example 2:

Comparative example 2 corresponds to comparative example 1 except the use 45 g of precipitated silica which has been modified with 1 g of Bis[3-(triethoxysilyl)propyl]tetrasul-fide.

### Comparative Example 3:

Comparative example 3 corresponds to comparative example 1 except the use of 45 g of precipitated silica which has been modified with 10 g of an isocyanated terminated hydrocarbon. The isocyanate terminated hydrocarbon was obtained by the reaction of MDI and a mixture of monofunctional C10 to C14 alcohols.

The mechanical properties of the elastomers obtained according to the examples 1 to 8 and comparative examples 1 to 3 are displayed in table 1.

**Table 1:**

| | B1 | B2 | B3 | B4 | B5 | B6 | B7 | B8 | C1 | C2 | C3 |
|---|---|---|---|---|---|---|---|---|---|---|---|
| M_{L}. [dNm] | 11.5 | 4.6 | 3.9 | 3.1 | 3.1 | 3.6 | 3.4 | 3.2 | 2.3 | 2.1 | 2.0 |
| M_{H} [dNm] | 46.6 | 25.6 | 22.1 | 19.4 | 18.5 | 20.0 | 20.2 | 20.3 | 29.5 | 28.0 | 26.0 |
| t90 [min] | 3.0 | 2.6 | 2.8 | 3.3 | 3.8 | 3.7 | 3.5 | 3.2 | 2.8 | 2.7 | 3.0 |
| hardness [shore A] | 84 | 70 | 67 | 64 | 65 | 67 | 63 | 63 | 63 | 62 | 60 |
| 300% modulus [MPa] | 12.1 | 11.9 | 10.5 | 4.8 | 4.6 | 7.0 | 6.1 | 5.9 | 4.5 | 6.0 | 2.3 |
| tensile strength [MPa] | 14.6 | 12.0 | 11.0 | 8.1 | 9.1 | 11.0 | 9.7 | 10.6 | 9.5 | 10.5 | 8.0 |
| elongation at break [%] | 315 | 303 | 333 | 412 | 401 | 546 | 438 | 465 | 388 | 385 | 350 |
| tear strength [kN/m] | 52.7 | 47.4 | 37.8 | 41.4 | 48.2 | 50.2 | 49.5 | 56.5 | 32.5 | 35 | 28.8 |
| abrasion [mm³] | 91 | 112 | 93 | 133 | 105 | 108 | 114 | 132 | 140 | 130 | 170 |

| | | | | | | | | | | | |
|---|---|---|---|---|---|---|---|---|---|---|---|
| Wherein M_{L}: minimum torque M_{H}: maximum torque T₉₀ is called optimum curing time, the lower the value, the shorter the curing time, the faster curing rate) | | | | | | | | | | | |

In the examples, the vulcanization properties of rubber composition was measured after a period of parking according to GB / T 9869-1997. Tensile strength, 300% modulus, elongation at break and tear strength of vulcanized rubber was measured according to GB / T 528-1998, Shore A hardness was measured according to GB / T 531-1999 and rotating roller Abrasion was measured by GB / T 9867-88.
The examples show that especially abrasion, tear strength, tensile strength and the 300% modulus can be improved, in most cases even compared to the use of Bis[3-(triethoxysilyl)propyl]tetrasul-fide.

## Claims

1. Method for producing a filled elastomer wherein a rubber composition is produced by mixing
I) raw rubber,
II) cross linking agent, capable to induce cross linking of the raw rubber (I),
III) filler, comprising functional groups reactive towards isocyanates,
IV) isocyanate terminated polymer composition and optionally
V) further additives
and cross linking of the rubber composition
wherein the rubber composition comprises besides the compounds (I) to (V) less than 10 % by weight of the total rubber composition of compounds having functional .groups being reactive towards isocyanates and wherein the isocyanate terminated polymer composition (IV) is applied in an amount of 1 to 200 % by weight based on the weight of the filler (III).

2. Method according to claim 1 wherein raw rubber (I) comprise groups reactive to isocyanates and not more than 50% of the isocyanate groups added as isocyanate terminated polymer composition (IV) are reacted with raw rubber (I),

3. Method according to claim 1 wherein the rubber composition does not comprise any compound reactive towards isocyanates beside fillers (III).

4. Method according to any of claims 1 to 3 wherein the filler (III) comprises silica.

5. Method according to any of claims 1 to 4 wherein the filler (III) and the isocyanate terminated polymer (IV) and optionally the raw rubber (I) and further additives (V) are mixed to form a pre mixture and this pre mixture is then mixed with the remaining components.

6. Method according to claim 5 wherein pre mixture is heated to a temperature from 60 to 150 °C.

7. Method according to any of the claims 4 to 6 wherein the silica is precipitated silica or fumed silica.

8. Method according to claim 7 wherein the silica comprises silica aggregates with a primary particle size of 2 to 100 nm.

9. Method according to any of the claims 1 to 8 wherein the isocyanate terminated polymer composition (IV) is obtainable via reaction or mixing of polyisocyanates (a) with polymeric compounds (b) reactive toward isocyanates, and also, if appropriate, with chain extenders and/or crosslinking agents (c), where an excess of the polyisocyanate (a) is used.

10. Method according to any of the claims 1 to 9 wherein the NCO content of the isocyanate terminated polymer composition (IV) is in the range from 5.0 to 30, based on the total weight of the isocyanate terminated polymer composition (IV).

11. Method according to any of the claims 1 to 10 wherein the isocyanate terminated polymer composition (IV) comprises groups compatible or reactive to the raw rubber (I).

12. Method according to any of the claims 1 to 10 wherein the isocyanate terminated polymer composition (IV) comprises groups compatible or reactive to the raw rubber (I).

13. Method according claim 12 wherein the group compatible or reactive to the raw rubber (I) is selected from the group consisting of hydrophobic groups, groups comprising carbon-carbon double bonds or groups comprising sulfur sulfur bonds or a combination of these groups.

14. Filled elastomer obtainable by the method according to any of claims 1 to 13.

15. Use of a filled elastomer according to claim 14 as shoe sole or a tire.

## Patentansprüche

1. Verfahren zur Herstellung eines gefüllten Elastomers, wobei eine Kautschukzusammensetzung hergestellt wird durch Mischen von:
I) rohem Kautschuk,
II) Vernetzungsmittel, das in der Lage ist, die Vernetzung des rohen Kautschuks (I) zu induzieren,
III) Füllstoff, umfassend funktionelle Gruppen, die gegenüber Isocyanaten reaktiv sind,
IV) Isocyanat-terminierter Polymerzusammensetzung und gegebenenfalls
V) weiteren Additiven,
und Vernetzung der Kautschukzusammensetzung,
wobei die Kautschukzusammensetzung neben den Verbindungen (I) bis (V) weniger als 10 Gewichts-% der gesamten Kautschukzusammensetzung an Verbindungen mit funktionellen Gruppen, die gegenüber Isocyanaten reaktiv sind, umfasst, und wobei die Isocyanat-terminierte Polymerzusammensetzung (IV) in einer Menge von 1 bis 200 Gewichts-%, basierend auf dem Gewicht des Füllstoffs (III), angewendet wird.

2. Verfahren gemäß Anspruch 1, wobei der rohe Kautschuk (I) Gruppen umfasst, die gegenüber Isocyanaten reaktiv sind, und nicht mehr als 50% der Isocyanatgruppen, hinzugesetzt als Isocyanat-terminierte Polymerzusammensetzung (IV), mit den rohen Kautschuk umgesetzt (I) werden.

3. Verfahren gemäß Anspruch 1, wobei die Kautschukzusammensetzung neben Füllstoffen (III) keine Verbindung umfasst, die gegenüber Isocynaten reaktiv ist.

4. Verfahren gemäß einem beliebigen der Ansprüche 1 bis 3, wobei der Füllstoff (III) Silica umfasst.

5. Verfahren gemäß einem beliebigen der Ansprüche 1 bis 4, wobei der Füllstoff (III) und das Isocyanat-terminierte Polymer (IV) und gegebenenfalls der rohe Kautschuk (I) und weitere Additive (V) gemischt werden, um eine Vormischung zu bilden, und anschließendes Mischen dieser Vormischung mit den restlichen Komponenten.

6. Verfahren gemäß Anspruch 5, wobei die Vormischung auf eine Temperatur von 60 bis 150 °C erhitzt wird.

7. Verfahren gemäß einem beliebigen der Ansprüche 4 bis 6, wobei das Silica präzipitiertes Silica oder Kieselpuder ist.

8. Verfahren gemäß Anspruch 7, wobei das Silica Silicaaggregate mit einer Primärteilchengröße von 2 bis 100 nm umfasst.

9. Verfahren gemäß einem beliebigen der Ansprüche 1 bis 8, wobei die Isocyanat-terminierte Polymerzusammensetzung (IV) über die Reaktion oder das Mischung von Polyisocyanaten (a) mit polymeren Verbindungen (b), die gegenüber Isocyanaten reaktiv sind, und ebenfalls, sofern geeignet, mit Kettenverlängerern und/oder Vernetzungsmitteln (c), erhältlich ist, wobei ein Überschuss des Polyisocyanats (a) verwendet wird.

10. Verfahren gemäß einem beliebigen der Ansprüche 1 bis 9, wobei der NCO-Gehalt der Isocyanat-terminierten Polymerzusammensetzung (IV) im Bereich von 5,0 bis 30 liegt, basierend auf dem Gesamtgewicht der Isocyanat-terminierten Polymerzusammensetzung (IV).

11. Verfahren gemäß einem beliebigen der Ansprüche 1 bis 10, wobei die Isocyanat-terminierte Polymerzusammensetzung (IV) Gruppen umfasst, die gegenüber dem rohen Kautschuk (I) verträglich oder reaktiv sind.

12. Verfahren gemäß einem beliebigen der Ansprüche 1 bis 10, wobei die Isocyanat-terminierte Polymerzusammensetzung (IV) Gruppen umfasst, die gegenüber dem rohen Kautschuk (I) verträglich oder reaktiv sind.

13. Verfahren gemäß Anspruch 12, wobei die Gruppe, die gegenüber dem rohen Kautschuk (I) verträglich oder reaktiv ist, aus der Gruppe gewählt wird, die aus hydrophoben Gruppen, Gruppen, welche Kohlenstoff-Kohlenstoff-Doppelbindungen umfassen, oder Gruppen, welche Schwefel-Schwefel-Bindungen umfassen, oder eine Kombination dieser Gruppen besteht.

14. Gefülltes Elastomer, das durch das Verfahren gemäß einem beliebigen der Ansprüche 1 bis 13 erhältlich ist.

15. Verwendung eines gefüllten Elastomers gemäß Anspruch 14 als Schuhsohle oder als ein Reifen.

## Revendications

1. Procédé de production d'un élastomère chargé, dans lequel une composition de caoutchouc est produite en mélangeant :
I) un caoutchouc brut,
II) un agent de réticulation capable d'induire une réticulation du caoutchouc brut (I)
III) une charge comprenant des groupes fonctionnels réactifs avec les isocyanates
IV) une composition polymère à terminaisons isocyanates, et facultativement
V) d'autres additifs
et en réticulant la composition de caoutchouc,
la composition de caoutchouc comprenant, outre les composés (I) à (V), moins de 10 % en poids de la composition totale de caoutchouc en composés comportant des groupes fonctionnels réactifs avec les isocyanates, et la composition polymère à terminaisons isocyanates (IV) étant appliquée à hauteur de 1 à 200 % en poids rapportée au poids de la charge (III).

2. Procédé selon la revendication 1, dans lequel le caoutchouc brut (I) comprend des groupes réactifs aux isocyanates, et pas plus de 50 % des groupes isocyanates ajoutés comme composition polymère à terminaisons isocyanates (IV) sont mis à réagir avec le caoutchouc brut (I).

3. Procédé selon la revendication 1, dans lequel la composition de caoutchouc ne contient aucun composé réactif avec les isocyanates excepté les charges (III).

4. Procédé selon l'une quelconque des revendications 1 à 3, dans lequel la charge (III) contient de la silice.

5. Procédé selon l'une quelconque des revendications 1 à 4, dans lequel la charge (III) et la composition polymère à terminaisons isocyanates (IV) et facultativement le caoutchouc brut (I) et d'autres additifs (V) sont mélangés pour former un pré-mélange, et ce pré-mélange est ensuite mélangé avec les autres composants.

6. Procédé selon la revendication 5, dans lequel le pré-mélange est chauffé à une température entre 60 et 150°C.

7. Procédé selon l'une quelconque des revendications 4 à 6, dans lequel la silice est de la silice précipitée ou de la silice sublimée.

8. Procédé selon la revendication 7, dans lequel la silice contient des agrégats de silice avec une granulométrie primaire de 2 à 100 nm.

9. Procédé selon l'une quelconque des revendications 1 à 8, dans lequel la composition polymère à terminaisons isocyanates (IV) peut s'obtenir par réaction ou mélange de polyisocyanates (a) et de composés polymères (b) réactifs avec les isocyanates, et donc, si cela convient, avec des agents d'allongement de chaîne et/ou des agents de réticulation (c), en utilisant un excès du polyisocyanate (a).

10. Procédé selon l'une quelconque des revendications 1 à 9, dans lequel la teneur en NCO de la composition polymère à terminaisons isocyanates (IV) se situe dans la gamme de 5,0 à 30, rapportée au poids total de la composition polymère à terminaisons isocyanates (IV).

11. Procédé selon l'une quelconque des revendications 1 à 10, dans lequel la composition polymère à terminaisons isocyanates (IV) contient des groupes compatibles ou réactifs avec le caoutchouc brut (I).

12. Procédé selon l'une quelconque des revendications 1 à 10, dans lequel la composition polymère à terminaisons isocyanates (IV) contient des groupes compatibles ou réactifs avec le caoutchouc brut (I).

13. Procédé selon la revendication 12, dans lequel le groupe compatible ou réactif avec le caoutchouc brut (I) est choisi dans le groupe constitué de groupes hydrophobes, des groupes comprenant des double-liaisons carbone-carbone ou des groupes comprenant des ponts disulfures ou une combinaison de ces groupes.

14. Élastomère chargé pouvant s'obtenir par le procédé selon l'une quelconque des revendications 1 à 13.

15. Utilisation d'un élastomère chargé selon la revendication 14 comme semelle de chaussure ou comme pneu.
